(19) Europäisches Patentamt
European Patent Office
Office européen des brevets

(11) **EP 3 933 374 A1**

(12) **EUROPEAN PATENT APPLICATION**
published in accordance with Art. 153(4) EPC

(43) Date of publication:
**05.01.2022   Bulletin 2022/01**

(51) Int Cl.:
***G01N 1/28*** *(2006.01)*

(21) Application number: **20763922.0**

(22) Date of filing: **21.04.2020**

(86) International application number:
**PCT/CN2020/085810**

(87) International publication number:
**WO 2020/173507 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.02.2019   CN 201910145061
27.02.2019   CN 201920246363 U**

(71) Applicant: **Beijing Center For Physical And Chemical Analysis
Haidian, Beijing 100089 (CN)**

(72) Inventors:
• **ZHANG, Yuxiang**
  **Haidian, Beijing 100089 (CN)**
• **GAO, Xia**
  **Haidian, Beijing 100089 (CN)**
• **LI, Qinmei**
  **Haidian, Beijing 100089 (CN)**
• **LIU, Weili**
  **Haidian, Beijing 100089 (CN)**
• **WANG, Yu**
  **Haidian, Beijing 100089 (CN)**

(74) Representative: **Vidon Brevets & Stratégie
16B, rue de Jouanet
BP 90333
35703 Rennes Cedex 7 (FR)**

(54) **CARBON FIBRE BUNDLE SAMPLE AND PREPARATION METHOD THEREFOR**

(57)     The present invention discloses a carbon fiber bundle sample and a preparation method thereof. Using two snap-fitted semicircular rings to form a restraint ring to restrain a carbon fiber bundle can obtain accurate volume density and outline dimension. The carbon fiber bundle sample comprises a restraint ring and a carbon fiber bundle. The restraint ring comprises an upper restraint ring and a lower restraint ring, the upper restraint ring and the lower restraint ring are two semicircular rings capable of being snap-fitted, and form a full circle after butt joint, and a cylindrical carbon fiber bundle is restrained in the restraint ring. When the carbon fiber bundle sample is prepared, the mass M of desired carbon fibers is calculated first, and then the carbon fibers to be tested with the mass M are weighed, and are bundled in parallel axially to form a cylindrical carbon fiber bundle; after the carbon fiber bundle is straightened, the upper restraint ring and the lower restraint ring are snap-fitted together from two opposite directions on the outer circumference of the carbon fiber bundle respectively to form a restraint ring to restrain the carbon fiber bundle in the restraint ring; and finally, the carbon fiber bundle extending out of two ends of the restraint ring is subjected to edge cutting to obtain a carbon fiber bundle sample.

Fig. 1

**Description**

**TECHNICAL FIELD**

The present invention relates to a sample and a preparation method thereof, in particular to a carbon fiber bundle sample and a preparation method thereof.

**BACKGROUND**

A carbon fiber is hailed as one of the materials with the best overall properties in current industry. It is a novel carbon material, the chemical composition of which contains more than 90% of carbon elements in mass fraction. The carbon fiber and its modified composite materials have been widely used in many fields such as aerospace, machinery manufacturing, textile, chemical industry, civil engineering, and medical and health care. Both the carbon fiber itself and its composite materials are of great practical application value.

Thermal conductivity is one of the important physical parameters for evaluating the thermal properties of carbon fibers, and obtaining the axial thermal conductivity of carbon fibers through accurate measurement has important guiding significance for the development, preparation and evaluation of carbon fibers with different thermal properties and composite materials thereof.

There are many methods for testing the thermal conduction property of materials, and can be generally classified into two types: steady-state and transient methods. In the steady-state method, a thermal conductivity is directly measured according to Fourier equation; however, the temperature range and the thermal conductivity range are narrow, so that the steady-state method is mainly applicable to measuring materials with medium and low thermal conductivity at medium temperature. The transient method has a wide application range, and is particularly applicable to testing of materials with high thermal conductivity as well as testing at high temperatures. The fastest growing and most representative method, which is generally accepted by the international thermal physics community, is the Flash Method, also referred to as the laser method or laser flash method.

Conventional methods for measuring the axial thermal conduction property of carbon fibers mainly comprise electrical methods such as a direct current energising method, a T-shaped method, and a $3\omega$ method. However, a single carbon fiber is too small in radial size (generally a few micrometers), and is anisotropic, and it is difficult to directly and accurately measure the thermal conductivity of the single carbon fiber. He Fengmei et al. used the laser flash method to obtain the thermal diffusivity and thermal conductivity of the carbon fiber, which confirms the feasibility of the laser flash method to measure the thermal diffusivity of the carbon fiber.

The current national standard GB/T 22588-2008 "Determination of Thermal Diffusivity or Thermal Conductivity by the Flash Method" is equivalent to use of ASTM E1461-2001 "Standard Test Method for Thermal Diffusivity by the Flash Method". This test method is applicable to measurements performed on solid materials that are essentially completely dense, homogeneous and isotropic, the materials being opaque to applied energy pulses. However, in some cases, it also produces acceptable results when used on porous samples. Therefore, anisotropic carbon fibers with tiny radial dimensions require rigorous and appropriate experimental design to accommodate certain deviations from these strict guidelines to perform axial thermal conductivity test of the carbon fibers.

ASTM E1461-2013 "Standard Test Method for Thermal Diffusivity by the Flash Method" requires that a test sample is generally a circular sheet, of which the front surface area is smaller than the area of an energy beam. Usually, the diameter of the test sample is 10 to 12.5 mm (in special cases, diameters as small as 6 mm and diameters as large as 30 mm have been reported to be used successfully). The optimum thickness depends on the value of an estimated thermal diffusivity, and should be selected so that the time to reach half of the maximum temperature is within the range of 10 to 1000 ms. A thinner sample is required at a higher temperature to minimise heat loss correction. However, the sample should commonly be thick enough to represent a test material. Generally, the thickness is within the range of 1 to 6mm.

Therefore, when the axial thermal conduction property (thermal diffusivity and thermal conductivity) of carbon fibers is tested by using the laser flash method, it is necessary that the carbon fibers are radially bundled (a plurality of axially parallel carbon fibers are arranged in a cylindrical shape), and then the carbon fiber bundle is cut out for a certain length in the axial direction to be prepared into a circular flaky sample, and the sample and its preparation are key points of using the flash method to measure the thermal diffusivity.

At present, for the carbon fiber bundle sample, a cylindrical clamp holder is used to clamp the carbon fiber bundle. There are big problems when the cylindrical holder is used, either it is difficult for the carbon fiber bundle to penetrate into the cylindrical clamp holder, or the outline dimension accuracy of the prepared sample hardly meets the standard required by GB/T 22588-2008 and ASTM E1461-2013, the internal smoothness is insufficient, and the filling rate of the carbon fibers cannot be precisely determined.

## SUMMARY

In view of this, the present invention provides a carbon fiber bundle sample. Using two snap-fitted semicircular rings to form a restraint ring to restrain a carbon fiber bundle can obtain accurate volume density and outline dimension.

The carbon fiber bundle sample comprises a restraint ring and a carbon fiber bundle;
the restraint ring comprises an upper restraint ring and a lower restraint ring, the upper restraint ring and the lower restraint ring are two semicircular rings capable of being snap-fitted, and form a full circle after butt joint to serve as a restraint ring, and the cylindrical carbon fiber bundle is restrained in the restraint ring.

The formed restraint ring has an axial length of 1mm-6mm; and the formed restraint ring has an inner diameter of 6mm-18mm, and a wall thickness of 2mm-2.5mm.

The material of the restraint ring is a polymer organic material with a thermal conductivity of less than 1 W/(m·K).

The material of the restraint ring is ABS plastics or nylon.

The volume filling rate of carbon fibers in the restraint ring is 50%-80%.

A preparation method of the carbon fiber bundle sample is as follows:

step 1: calculating the mass M of carbon fibers to be tested required to reach a set volume filling rate;

step 2: weighing the carbon fibers to be tested with the mass M, and bundling the carbon fibers in parallel axially to form a cylindrical carbon fiber bundle;

step 3: straightening the carbon fiber bundle;

step 4: snap-fitting the upper restraint ring and the lower restraint ring together from two opposite directions on the outer circumference of the carbon fiber bundle respectively to form a restraint ring to restrain the carbon fiber bundle in the restraint ring; and

step 5: performing edge cutting on the carbon fiber bundle extending out of two ends of the restraint ring to obtain a carbon fiber bundle sample.

In step 1, the method for calculating the mass M of the carbon fibers to be tested required to reach a set volume filling rate is as follows:

a bundle of carbon fibers with the length L and the mass m is selected, and the cross section area $S_c$ of a single carbon fiber is calculated from Formula (1) according to the specific gravity p of the carbon fiber to be tested :

$$S_c = \frac{m}{\rho L} \qquad (1)$$

the inner hole section area $S_y$ of the restraint ring is calculated from Formula (2) according to the inner diameter D of the restraint ring:

$$S_y = \frac{\pi D^2}{4} \qquad (2)$$

setting a volume filling rate K, the cross section area S of the carbon fiber bundle sample with the volume filling rate K is derived from Formula (3):

$$S = K S_y \qquad (3)$$

the scale coefficient of S and $S_c$ is derived from Formula (4):

$$\varnothing = \frac{S}{S_c} \qquad (4)$$

the mass M of the carbon fibers to be tested required to reach the volume filling rate K is: M= Øm

Beneficial effects:

(1) The present invention uses two snap-fitted semicircular rings to form a restraint ring to restrain a carbon fiber bundle, so that the carbon fiber bundle sample can obtain accurate volume density and outline dimension.

(2) Using the sample preparation method according to the present invention can greatly reduce interferences of the sample preparation process of a sample on experimental results, ensure the accuracy and repeatability of the experimental link, facilitate the analysis of experimental data and experimental results later, and be conductive to application and popularisation of measuring the axial thermal diffusivity of carbon fibers by the flash method.

(3) When the sample is prepared, the mass of the desired carbon fibers is calculated according to the inner diameter of the restraint ring and the set volume filling rate, which can ensure the accuracy of the volume density of the carbon fiber bundle sample.

## BRIEF DESCRIPTION OF THE DRAWINGS

Fig. 1 is a front view of a carbon fiber bundle sample;
Fig. 2 is a structural schematic diagram of an upper restraint ring;
Fig. 3 is a structural schematic diagram of a lower restraint ring;
Fig. 4 is a schematic diagram of working positions of the upper and lower restraint rings;
Fig. 5 is a structural schematic diagram of an upper restraint ring component equipped with the upper restraint ring;
Fig. 6 is a structural schematic diagram of a lower restraint ring component equipped with the lower restraint ring; and
Fig. 7 is a schematic diagram showing bundling carbon fibers by a restraint ring for edge cutting.

In which: 1- upper restraint ring; 2- lower restraint ring; 3- upper restraint ring bracket; 4- positioning piece C; 5- positioning piece D; 6- lower restraint ring bracket; 7-positioning piece A; 8- positioning piece B.

## DETAILED DESCRIPTION

The present invention will be described in detail below in conjunction with the drawings and embodiments.

**Embodiment 1:**

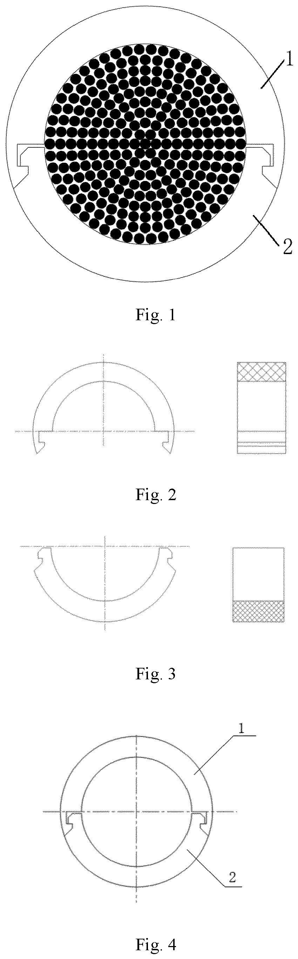

This embodiment provides a carbon fiber bundle sample, and using two snap-fitted semicircular rings to form a restraint ring to restrain a carbon fiber bundle can obtain accurate volume density and outline dimension.
The carbon fiber bundle sample comprises a restraint ring and a carbon fiber bundle restrained in the restraint ring.
Wherein, the carbon fiber bundle is in a cylindrical shape formed by parallel bundling of a plurality of axially parallel carbon fibers to be tested. As shown in Figs. 1-4, the restraint ring is formed by butting two semicircular rings capable of being snap-fitted, the two semicircular rings are an upper restraint ring 1 and a lower restraint 2 respectively, and the upper restraint ring 1 and the lower restraint 2 form a full circle after butt joint. The upper restraint ring 1 and the lower restraint 2 are connected in a snap-fitted form at the butt joint, and thus cannot be separated in the radial direction, and the carbon fiber bundle is restrained in the restraint ring.
The formed restraint ring has an inner diameter of 6mm-18mm, preferably 12.7mm. The restraint ring has a thickness (i.e., axial length) of 1mm-6mm, and considering that a loosening phenomenon easily occurs when the thickness of the sample after bundling of the carbon fibers is less than 3mm, on this basis, in this solution, 4mm is used as the thickness of the restraint ring when the thermal conductivity of the carbon fibers to be tested is less than 100W/(m·K), and 6mm is used as the thickness of the restraint ring when the thermal conductivity of the carbon fibers to be tested is greater than 500W/(m·K). That is to say, a relatively small thickness is used when carbon fibers with low thermal conductivity are tested, and a relatively large thickness is used when carbon fibers with high thermal conductivity are tested. The wall thickness of the restraint ring is most preferably 2-2.5mm. The material of the restraint ring can be an opaque polymer organic material of which the thermal conductivity is less than 1W/(m·K). This material can be made by mechanical processing, such as ABS plastics; or this material can be 3D printed, such as nylon. Moreover, the restraint ring is not prone to deformation after sample preparation.

**Embodiment 2:**

A preparation process of the carbon fiber bundle sample in embodiment 1 is as follows:

(1) The mass M of the desired carbon fibers is calculated

The carbon fiber bundle is as compact as possible when being located inside the restraint ring, theoretically up to 80% volume filling rate, properly 50%-80%, preferably a higher volume filling rate.

A bundle of carbon fibers to be tested with the mass m and the length L is selected, and the cross section area $S_c$ of a single carbon fiber is calculated from Formula (1) according to the specific gravity p of the carbon fiber to be tested:

$$S_c = \frac{m}{\rho L} \qquad (1)$$

From Formula (2), the inner hole section area $S_y$ of the restraint ring is calculated according to the inner diameter D of the restraint ring:

$$S_y = \frac{\pi D^2}{4} \qquad (2)$$

Setting a volume filling rate K, the cross section area S of the carbon fiber bundle with the volume filling rate K is derived from Formula (3):

$$S = K S_y \qquad (3)$$

The scale coefficient of S and $S_c$ is derived from Formula (4):

$$\emptyset = \frac{S}{S_c} \qquad (4)$$

The mass of carbon fibers required to reach the volume filling rate K is M= Øm.

(2) The carbon fibers to be tested with the mass M are weighed, and the carbon fibers are bundled in parallel axially to form a cylindrical carbon fiber bundle;

(3) The carbon fiber bundle is straightened

(4) The upper restraint ring 1 and the lower restraint ring 2 are snap-fitted together from two opposite directions on the outer circumference of the carbon fiber bundle respectively to form a restraint ring to restrain the carbon fiber bundle in the restraint ring; and

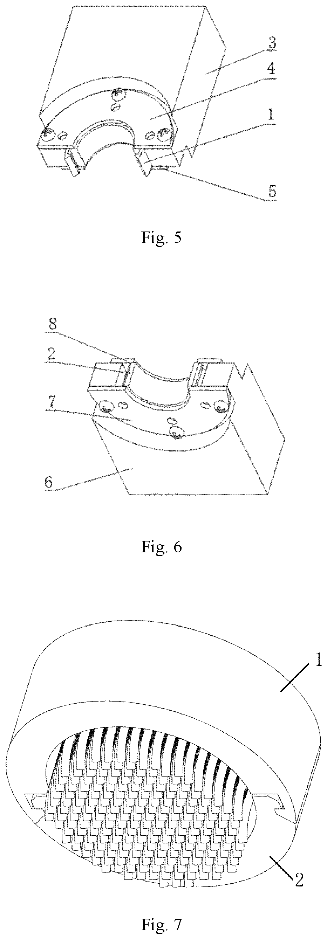

(5) The longer parts, extending out of two ends of the restraint ring, of the carbon fiber bundle restrained by the restraint ring are cut short appropriately for subsequent edge cutting. While one end of the snap-fitted restraint ring containing the carbon fiber bundle is clamped, a cutter is used to cut off redundant carbon fibers by clinging to the edge of the other end of the restraint ring. Then, edge cutting is performed on the carbon fiber bundle at the other end of the restraint ring with this method, and thus a carbon fiber bundle sample with the same thickness as the restraint ring is formed, as shown in Fig. 7.

In step (4), when the upper restraint ring 1 and the lower restraint ring 2 are snap-fitted together from two opposite directions on the outer circumference of the carbon fiber bundle respectively to form a restraint ring, the upper restraint ring 1 is clamped and positioned by an upper restraint ring positioning component, and the lower restraint ring 2 is clamped and positioned by a lower restraint ring positioning component.

As shown in Fig. 5, the upper restraint ring positioning component comprises an upper restraint ring bracket 3, a positioning piece B 4, a positioning piece D 5 and coupling fasteners, wherein the coupling fasteners are screws. One end of the upper restraint ring bracket 3 is of a semicircular structure with the same arc as the upper restraint ring 1, the upper restraint ring 1 is placed on an arc surface of the semicircular structure, the positioning piece B 4 and the positioning piece D 5 are mounted on end faces of two sides of the semicircular structure of the upper restraint ring bracket 3 respectively through the screws to clamp the upper restraint ring 1 located therebetween, so as to position the upper restraint ring 1, thereby limiting the axial and radial displacements of the upper restraint ring 1 through the positioning piece B 4, the positioning piece D 5 and the arc surface of the semicircular structure to prevent the upper restraint ring 1 from rotating and falling off from the upper restraint ring bracket 3.

The structure of the lower restraint ring positioning component is the same as that of the upper restraint ring positioning component, as shown in Fig. 6, the lower restraint ring positioning component specifically comprises a lower restraint ring bracket 6, a positioning piece A 7, a positioning piece C 8 and coupling fasteners, wherein the coupling fasteners are screws. One end of the lower restraint ring bracket 6 is of a semicircular structure with the same arc as the lower restraint 2, the lower restraint 2 is placed on an arc surface of the semicircular structure, the positioning piece A 7 and the positioning piece C 8 are mounted on end faces of two sides of the semicircular structure of the lower restraint ring bracket 6 respectively through the screws to clamp the lower restraint ring 1 located therebetween, so as to realise positioning of the lower restraint ring 1, thereby limiting the axial and radial displacements of the lower restraint ring 2 through the positioning piece A 7, the positioning piece C 8 and the arc surface of the semicircular structure to prevent the lower restraint ring 2 from rotating and falling off from the lower restraint ring bracket 6.

## Claims

1. A carbon fiber bundle sample, **characterized by** comprising a restraint ring and a carbon fiber bundle, wherein the restraint ring comprises an upper restraint ring (1) and a lower restraint ring (2), the upper restraint ring (1) and the lower restraint ring (2) are two semicircular rings capable of being snap-fitted, and form a full circle after butt joint to serve as a restraint ring, and the cylindrical carbon fiber bundle is restrained in the restraint ring.

2. The carbon fiber bundle sample of claim 1, **characterized in that** the formed restraint ring has an axial length of 1mm-6mm; and the formed restraint ring has an inner diameter of 6mm-18mm, and a wall thickness of 2mm-2.5mm.

3. The carbon fiber bundle sample of claim 1, **characterized in that** the material of the restraint ring is a polymer organic material with a thermal conductivity of less than 1 W/(m·K).

4. The carbon fiber bundle sample of claim 3, **characterized in that** the material of the restraint ring is ABS plastics or nylon.

5. The carbon fiber bundle sample of claim 1, **characterized in that** a volume filling rate of carbon fibers in the restraint ring is 50%-80%.

6. A preparation method of the carbon fiber bundle sample of any one of claims 1-5, **characterized by** comprising:

   step 1: calculating the mass M of carbon fibers to be tested required to reach a set volume filling rate;
   step 2: weighing the carbon fibers to be tested with the mass M, and bundling the carbon fibers in parallel axially to form a cylindrical carbon fiber bundle;
   step 3: straightening the carbon fiber bundle;
   step 4: snap-fitting the upper restraint ring (1) and the lower restraint ring (2) together from two opposite directions on the outer circumference of the carbon fiber bundle respectively to form a restraint ring to restrain the carbon fiber bundle in the restraint ring; and

step 5: performing edge cutting on the carbon fiber bundle extending out of two ends of the restraint ring to obtain a carbon fiber bundle sample.

7. The preparation method of the carbon fiber bundle sample of claim 6, **characterized in that** in step 1, the method for calculating the mass M of carbon fibers to be tested required to reach a set volume filling rate is as follows:

a bundle of carbon fibers with the length L and the mass m is selected, and the cross section area $S_c$ of a single carbon fiber is calculated from Formula (1) according to the specific gravity $\rho$ of the carbon fiber to be tested:

$$S_c = \frac{m}{\rho L} \qquad (1)$$

the inner hole section area $S_y$ of the restraint ring is calculated from Formula (2) according to the inner diameter D of the restraint ring:

$$S_y = \frac{\pi D^2}{4} \qquad (2)$$

setting a volume filling rate K, the cross section area S of the carbon fiber bundle sample with the volume filling rate K is obtained from Formula (3):

$$S = K S_y \qquad (3)$$

from Formula (4), the scale coefficient of S and $S_c$ is derived:

$$\emptyset = \frac{S}{S_c} \qquad (4)$$

the mass M of the carbon fibers to be tested required to reach the volume filling rate K is: M= Øm

8. The preparation method of the carbon fiber bundle sample of claim 6, **characterized in that** in step 4, when the upper restraint ring (1) and the lower restraint ring (2) are snap-fitted together from two opposite directions on the outer circumference of the carbon fiber bundle respectively to form a restraint ring, the upper restraint ring (1) is clamped and positioned by an upper restraint ring positioning component, and the lower restraint ring (2) is clamped and positioned by a lower restraint ring positioning component; and

the upper restraint ring positioning component comprises: an upper restraint ring bracket (3), a positioning piece B (4) and a positioning piece D (5); one end of the upper restraint ring bracket (3) is of a semicircular structure with the same radius as the upper restraint ring (1), the upper restraint ring (1) is placed on an arc surface of the semicircular structure, the positioning piece B (4) and the positioning piece D (5) are mounted on end faces of two sides of the semicircular structure of the upper restraint ring bracket (3) respectively through fastening connectors to clamp the upper restraint ring (1) located therebetween; and
the structure of the lower restraint ring positioning component is the same as the structure of the upper restraint ring positioning component.

9. The preparation method of the carbon fiber bundle sample of claim 6, **characterized in that** in step 5, the parts, extending out of the restraint ring, of two ends of the carbon fiber bundle are cut short to a set length first; then while the restraint ring is clamped, a cutter is used to cut off the carbon fiber bundle extending out of the restraint ring by clinging to an end part of the restraint ring; and after edge cutting on one end of the carbon fiber bundle is completed, the carbon fiber bundle at the other end of the restraint ring is subjected to edge cutting with the same method, and thus a carbon fiber bundle sample with the same thickness as the restraint ring is formed.

Fig. 1

Fig. 2

Fig. 3

Fig. 4

Fig. 5

Fig. 6

Fig. 7

## INTERNATIONAL SEARCH REPORT

| | International application No. |
|---|---|
| | **PCT/CN2020/085810** |

**A.  CLASSIFICATION OF SUBJECT MATTER**

G01N 1/28(2006.01)i

According to International Patent Classification (IPC) or to both national classification and IPC

**B.  FIELDS SEARCHED**

Minimum documentation searched (classification system followed by classification symbols)

G01N 1

Documentation searched other than minimum documentation to the extent that such documents are included in the fields searched

Electronic data base consulted during the international search (name of data base and, where practicable, search terms used)

CNKI, CNTXT, VEN, 纤维, 束, 约束, 夹持, 固定, 半圆, 半环, 卡箍, fiber, fibre, bundle, defin+, restrict+, hold+, fix+, semi circle, semi ring

**C.  DOCUMENTS CONSIDERED TO BE RELEVANT**

| Category* | Citation of document, with indication, where appropriate, of the relevant passages | Relevant to claim No. |
|---|---|---|
| PX | CN 109855934 A (BEIJING CENTER FOR PHYSICAL & CHEMICAL ANALYSIS) 07 June 2019 (2019-06-07) <br> claims 1-9 | 1-9 |
| PX | CN 209784012 U (BEIJING CENTER FOR PHYSICAL & CHEMICAL ANALYSIS) 13 December 2019 (2019-12-13) <br> entire document | 1-9 |
| Y | CN 106645277 A (BEIHANG UNIVERSITY) 10 May 2017 (2017-05-10) <br> description, paragraphs [0031]-[0078], and figures 1-6 | 1-9 |
| Y | CN 101530964 A (NANTONG SHENMA ELECTRIC POWER TECHNOLOGY CO., LTD.) 16 September 2009 (2009-09-16) <br> description, page 2, lines 2-7, and figure 1 | 1-9 |
| A | CN 104913969 A (NANJING UNIVERSITY OF AERONAUTICS AND ASTRONAUTICS) 16 September 2015 (2015-09-16) <br> entire document | 1-9 |
| A | CN 108871919 A (TIANJIN RESEARCH INSTITUTE FOR WATER TRANSPORT ENGINEERING, M.O.T. et al.) 23 November 2018 (2018-11-23) <br> entire document | 1-9 |

☑ Further documents are listed in the continuation of Box C.   ☑ See patent family annex.

| | |
|---|---|
| *  Special categories of cited documents: <br> "A"  document defining the general state of the art which is not considered to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
|---|---|
| **22 June 2020** | **01 July 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/085810** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2013181902 A (MITSUBISHI RAYON CO., LTD.) 12 September 2013 (2013-09-12)<br>entire document | 1-9 |
| A | US 6129896 A (DRAWN OPTICAL COMPONENTS, INC.) 10 October 2000 (2000-10-10)<br>entire document | 1-9 |

Form PCT/ISA/210 (second sheet) (January 2015)

**INTERNATIONAL SEARCH REPORT**
Information on patent family members

International application No.

**PCT/CN2020/085810**

| Patent document cited in search report | | | Publication date (day/month/year) | Patent family member(s) | | | Publication date (day/month/year) |
|---|---|---|---|---|---|---|---|
| CN | 109855934 | A | 07 June 2019 | CN | 209784012 | U | 13 December 2019 |
| CN | 209784012 | U | 13 December 2019 | CN | 109855934 | A | 07 June 2019 |
| CN | 106645277 | A | 10 May 2017 | CN | 106645277 | B | 22 November 2019 |
| CN | 101530964 | A | 16 September 2009 | | None | | |
| CN | 104913969 | A | 16 September 2015 | CN | 104913969 | B | 06 March 2018 |
| CN | 108871919 | A | 23 November 2018 | CN | 208688901 | U | 02 April 2019 |
| JP | 2013181902 | A | 12 September 2013 | | None | | |
| US | 6129896 | A | 10 October 2000 | EP | 1166077 | A2 | 02 January 2002 |
| | | | | WO | 0040942 | A2 | 13 July 2000 |
| | | | | JP | 2002534672 | A | 15 October 2002 |
| | | | | AU | 4324100 | A | 24 July 2000 |

Form PCT/ISA/210 (patent family annex) (January 2015)